# FASCICULE DE BREVET EUROPEEN

(11) **EP 3 223 581 B1**
(45) Date de publication et mention de la délivrance du brevet: **06.04.2022**
(21) Numéro de dépôt: 17159916.0
(22) Date de dépôt: 08.03.2017
(51) Int. Cl.: H05B 1/02, H05B 3/54, B60S 1/38, B60S 1/52

(54) **BALAI D'ESSUIE-GLACE DE VÉHICULE**
SCHEIBENWISCHER FÜR FAHRZEUG
SCREEN WIPER BLADE FOR A VEHICLE

(30) Priorité: 21.03.2016 FR 1652402
(43) Date de publication de la demande: 27.09.2017
(73) Titulaire: Valeo Systèmes d'Essuyage, 78322 Le Mesnil Saint Denis (FR)
(72) Inventeur: BAYARD, Geoffrey, 63500 ISSOIRE (FR); JARASSON, Jean-Michel, 78322 LA VERRIERE (FR); CAILLOT, Gérald, 78322 LA VERRIERE (FR); IZABEL, Vincent, 78322 LA VERRIERE (FR)
(74) Mandataire: Valeo Visibility

(56) Documents cités:
- WO-A1-2012/072301
- DE-A1- 1 906 670
- FR-A1- 3 014 388
- US-A- 4 603 451
- US-A1- 2004 006 839

## Description

La présente invention concerne un balai d'essuie-glace de véhicule, en particulier automobile, ce balai étant du type comportant un circuit électrique de chauffage.

Il est connu de chauffer un balai d'essuie-glace de véhicule automobile, en particulier pour le dégivrer en hiver. Dans le cas où ce balai est équipé de canaux internes de distribution de liquide lave-glace, le chauffage du balai permet en outre de chauffer le liquide avant sa pulvérisation sur le pare-brise du véhicule, ce qui facilite le dégivrage du pare-brise et peut éviter ainsi l'utilisation d'une raclette à givre manuelle.

Typiquement, un balai d'essuie-glace du type « balai plat » comprend un corps longitudinal portant une lame d'essuyage, en général en caoutchouc, destinée à frotter contre le pare-brise du véhicule pour évacuer de l'eau en l'amenant en dehors du champ de vision du conducteur. Le balai comporte en outre au moins une vertèbre longitudinale qui confère un cintrage à la lame d'essuyage, de manière à favoriser l'application de cette lame sur le pare-brise. Le balai est porté par un bras qui est entraîné par un moteur dans un mouvement de va-et-vient angulaire. Les moyens de liaison du balai au bras comprennent en général un connecteur qui est solidaire du corps et un adaptateur qui est articulé sur le corps et fixé à une extrémité du bras.

Dans la technique actuelle, les moyens de chauffage d'un balai d'essuie-glace comprennent en général un conducteur électrique chauffant.

On a déjà proposé d'équiper la vertèbre de cintrage d'un balai avec des moyens de chauffage, ces moyens de chauffage se présentant sous la forme d'un film qui est rapporté et collé sur la vertèbre et qui inclut un circuit ou une piste d'un conducteur électrique chauffant. Dans la technique actuelle, le conducteur du circuit forme une boucle dont les extrémités sont reliées à des bornes d'alimentation électrique.

Pour un véhicule haut de gamme, le pilotage et la protection de la fonction chauffage d'un balai d'essuie-glace se fait en général directement par l'électronique et le circuit électrique du véhicule. Ce pilotage nécessite une intégration spécifique en amont pour la définition de l'architecture électrique du véhicule et engendre donc un certain coût.

Pour les véhicules de gamme moyenne ou inférieure, certains clients ne souhaitent pas modifier leur architecture et demande une intégration de la protection directement dans le balai chauffant, de manière à ne pas affecter les autres fonctions du véhicule en mode dégradé de la fonction (mauvaise information, défaillance du capteur de température extérieure ou de la vitesse du véhicule, par exemple).

De manière générale, la fonction chauffage se déclenche en-deçà d'une température extérieure de +5°C, pour assurer un dégivrage global du balai, que ce soit des canaux de distribution, des moyens de liaison du balai au bras, voire de la lame d'essuyage en contact avec le pare-brise. Dans un mode dégradé (par exemple, un capteur de température extérieure ou de vitesse de véhicule défaillant - par exemple le véhicule est à l'arrêt, mais le capteur dit que le véhicule est en mouvement), l'effet serait un chauffage permanent des balais au-delà de +5°C, potentiellement en plein été avec des températures ambiantes supérieures à +30°C, avec un risque potentiel pouvant entraîner un point chaud, un court-circuit, une dégradation physique du balai et dans le pire des cas un départ de feu.

Le document FR 3 014 388 A1 divulgue un balai d'essuie-glace de véhicule selon le préambule de la revendication 1.

L'invention propose une solution simple, efficace et économique à ce problème de la technique antérieure.

L'invention propose un balai d'essuie-glace de véhicule, en particulier automobile, tel que défini par la revendication 1.

Dans l'optique de préserver le circuit électrique et électronique du véhicule, d'éviter une dégradation du balai et donc de la fonction essuyage, essentielle pour le client, l'invention propose d'intégrer au balai ou à un élément du balai une fonction fusible permettant d'éviter les risques cités ci-dessus. Dans le cas où cette fonction fusible s'activerait, le balai perdrait sa fonction de chauffage, qui reste optionnelle, et conserverait sa fonction essuyage, qui est, elle, réglementaire. Cette perte de fonction est ici temporaire du fait du type de fusible utilisé, à savoir un thermostat bilame.

Un thermostat bilame comprend par exemple deux plaques électriquement conductrices et présentant des coefficients de dilatation différents. Quand la température des plaques est inférieure à une température seuil, les plaques sont en contact. Le circuit électrique est donc fermé, et le circuit de chauffage fonctionne. Quand la température augmente, les plaques se dilatent et se déforment différemment, s'éloignant ainsi l'une de l'autre. Quand les plaques atteignent la température seuil, les plaques du bilame se séparent. Le circuit électrique est donc ouvert, et le circuit de chauffage ne fonctionne plus. Le thermostat bilame agit comme un interrupteur du circuit électrique, permettant d'interrompre la circulation du courant quand la température des plaques atteint la température seuil.

Il est envisageable d'utiliser cette protection thermique de deux manières : soit par chauffage direct du thermostat ; le courant que l'on désire contrôler passe directement dans le thermostat ; c'est le cas si le thermostat est mis en série sur le circuit de chauffage (fil ou film chauffant par exemple), soit par chauffage indirect du thermostat ; c'est le cas si le thermostat est placé à distance du circuit de chauffage, par exemple sur un conducteur ou câble électrique d'alimentation du balai.

Le balai peut comprendre une ou plusieurs des caractéristiques suivantes, prises isolément les unes des autres ou en combinaison les unes avec les autres :
- ledit au moins un thermostat bilame est situé à une extrémité longitudinale du balai,
- ledit au moins un thermostat bilame est situé dans une zone de liaison du balai à un bras d'essuie-glace ; ce type de liaison permet de limiter le coût de la protection en cas de remplacement du balai parce que le thermostat bilame peut être placé sur le câble ou les conducteurs électriques d'alimentation du circuit de chauffage du balai, cette solution étant économique,
- ce balai étant du type à palonnier,
- le balai selon l'invention étant du type plat et comportant une vertèbre longitudinale de cintrage qui est solidaire sensiblement en son milieu d'un connecteur mécanique de liaison à un bras d'essuie-glace,
- selon l'invention, ledit au moins un thermostat bilame est situé au niveau du connecteur mécanique,
- ledit au moins un thermostat bilame est situé au niveau d'au moins un embout d'extrémité monté à une extrémité longitudinale de ladite vertèbre,
- le balai comprend un connecteur hydraulique configuré pour coopérer, par exemple par emboîtement, avec ledit connecteur mécanique,
- ledit au moins un thermostat bilame étant situé au niveau du connecteur hydraulique ou sur ledit connecteur hydraulique,
- le balai comprend un connecteur électrique configuré pour coopérer, par exemple par emboîtement, avec ledit connecteur mécanique,
- ledit au moins un thermostat bilame est situé au niveau du connecteur électrique ou sur ledit connecteur électrique,
- ledit au moins un thermostat bilame est relié à au moins un fil électrique d'alimentation dudit connecteur électrique,
- ledit au moins un thermostat bilame est situé dans ou sur un carter ou corps longitudinal dudit balai,
- ledit au moins un thermostat bilame est associé à un voyant lumineux configuré pour signaler un état de ce thermostat, et
- le balai selon l'invention comprend au moins une rampe de distribution d'un fluide, en particulier d'un liquide lave-glace.

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue schématique en perspective d'un système d'essuyage pour une vitre d'un véhicule automobile ;
- la figure 2 est une vue détaillée de la figure 1, montrant la liaison entre le balai d'essuie-glace et le bras d'entraînement ;
- la figure 3 est une vue éclatée de la liaison de la figure 2 ;
- la figure 4 est une vue schématique en perspective et en coupe longitudinale d'une partie du balai de la figure 3 ;
- la figure 5 est une vue schématique d'une vertèbre chauffante du balai ;
- la figure 6 représente une boucle de contrôle permettant la régulation d'une température du circuit de chauffage du balai ;
- la figure 7 est un graphique montrant la variation de température du circuit de chauffage à différentes tensions d'alimentation ;
- la figure 8 est un graphique montrant la variation de résistance du thermostat bilame en fonction de la température ;
- la figure 9 est une vue correspondant à la figure 4 et illustre des variantes de réalisation de l'invention ;
- la figure 10 est une vue schématique en perspective d'un connecteur électrique ou hydraulique du balai selon l'invention ;
- les figures 11 et 12 sont des vues schématiques en perspective de vertèbres, et illustrent des variantes de réalisation de l'invention.

Il faut noter que les figures exposent l'invention de manière détaillée pour mettre en œuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations haute ou basse s'apprécient par rapport au point de fixation du balai sur le bras, la dénomination intérieure correspondant à la partie où le bras et un demi-balai s'étendent.

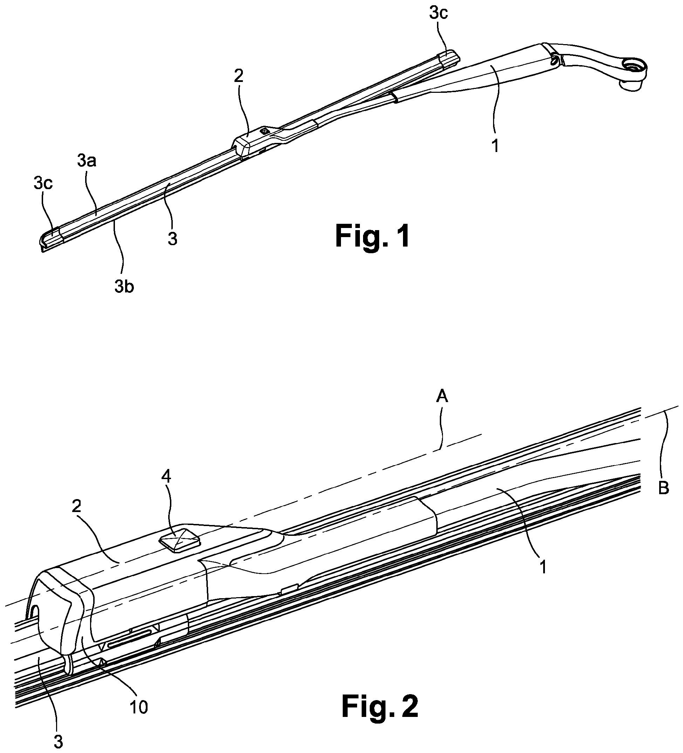

En se référant aux figures 1 et 2, on voit un système d'essuyage composé d'un bras 1 se prolongeant à son extrémité extérieure par une pièce terminale 2, qui est fixée par exemple par un sertissage sur le côté intérieur du bras 1. La pièce terminale 2 recouvre un adaptateur porteur du balai 3 par l'intermédiaire d'un connecteur mécanique 10. L'adaptateur a vocation à s'insérer dans la pièce terminale 2 par un mouvement de translation selon une première direction longitudinale A de la pièce terminale 2, pour venir dans la position d'utilisation autrement appelé position de fonctionnement, où il est positionné en butée contre une forme coopérante donnée à la pièce terminale 2. Il y est alors fixé de façon réversible au moyen d'un bouton escamotable de verrouillage 4, qui coopère avec un orifice pratiqué à cet effet dans la partie supérieure de la pièce terminale. Le balai s'étend longitudinalement selon une deuxième direction longitudinale référencée B.

Le balai 3 comprend ici un corps longitudinal 3a, une lame d'essuyage 3b, en général en caoutchouc, et au moins une vertèbre qui confère un cintrage à la lame 3b de manière à favoriser l'application de cette lame sur le pare-brise.

Le corps 3a du balai 3 comporte un déflecteur supérieur destiné à améliorer le fonctionnement du balai, le but de ce déflecteur étant d'améliorer le plaquage du balai sur le pare-brise et donc la performance aérodynamique du système.

Le balai 3 comprend en outre des embouts d'extrémité 3c pour l'accrochage de la lame 3c et de la vertèbre sur le corps. Ces embouts 3c sont situés à chacune des extrémités longitudinales du corps 3a. Chaque embout 3c comprend un corps présentant au moins une surface aérodynamique et définissant un logement de réception de la lame 3c et de la vertèbre dans l'exemple représenté.

Le corps 3a du balai est ici réalisé en deux parties indépendantes qui sont disposées sensiblement bout à bout et raccordées l'une à l'autre par le connecteur mécanique 10.

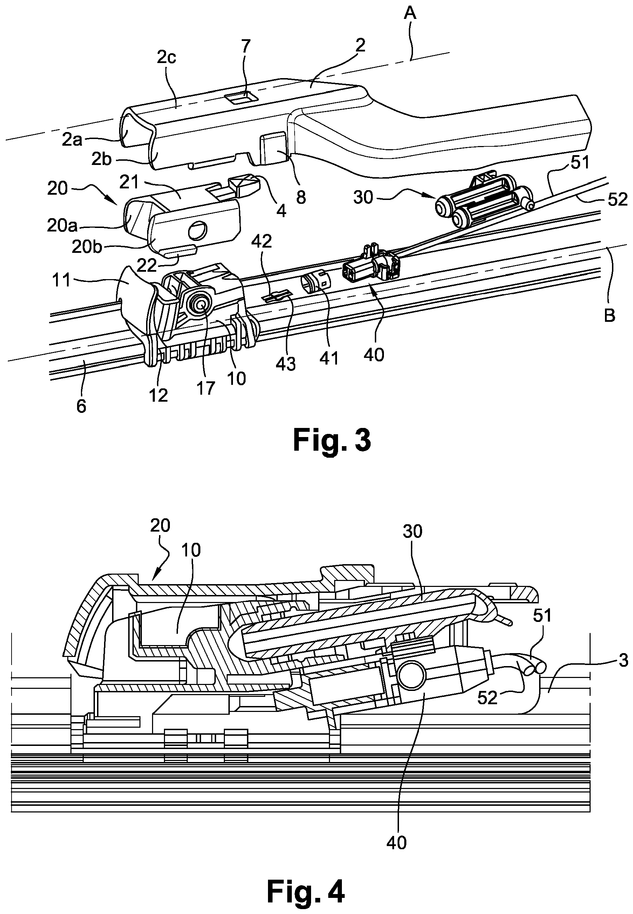

En se référant maintenant à la figure 3, on voit le détail des éléments assurant le rattachement du balai 3 au bras 1.

La pièce terminale 2 présente une forme en « U » renversé où l'ouverture de cette forme en « U » fait face au vitrage. Cette pièce terminale 2 comprend une base 2c à la partie supérieure et deux branches latérales 2a et 2b s'étendant en direction du vitrage. Sur la base 2c est pratiqué un orifice 7 dans lequel vient se loger le bouton escamotable de verrouillage 4 issu de l'adaptateur 20. La tranche inférieure de chaque branche latérale comprend un bord plié à 90° en direction du volume interne défini par la base 2c et les branches 2a et 2b, qui a pour fonction d'une part de guider longitudinalement l'introduction de l'adaptateur 20 et d'autre part, de servir de butée en translation à des butées correspondantes placées sur l'adaptateur 20. Sur au moins une des branches latérales 2a ou 2b de la pièce terminale 2 est fixé un moyen de retenue 8 dont la fonction est de retenir le connecteur électrique directement, ou indirectement via un support 30. Le moyen de retenue 8 bloque une translation du connecteur électrique 40 lors du retrait du balai 3 pour le maintenir dans le volume interne de la pièce terminale 2, ce qui sera décrit en détail plus loin. Avantageusement, un moyen de retenue 8 est solidarisé sur chacune des branches latérales 2a et 2b constitutives de la pièce terminale 2. Dans une telle situation, la partie terminale 2 comporte deux moyens de retenue 8 opposés l'un à l'autre.

L'adaptateur 20 présente une forme en chape, complémentaire au volume interne de la pièce terminale 2, de sorte à venir se loger dans cette dernière. Deux parois latérales 20a et 20b sont jointes par un pont 21 et comprennent chacune à leurs extrémités libres un rebord 22 plié vers l'extérieur de l'adaptateur. Ces rebords 22 forment une butée de translation quand ils viennent en appui contre les bords pliés des branches latérales de la pièce terminale 2. Cet adaptateur 20 comprend également deux trous pratiqués au travers des parois latérales 20a et 20b et présentant un axe confondu, destiné à servir d'axe de rotation entre le balai 3 et le bras 1 pour autoriser une liberté en rotation entre le bras 1 et le balai 3 quand le système d'essuyage opère des mouvements de va-et-vient. Ceci permet au balai 3 de suivre la courbure du vitrage à essuyer.

Le connecteur mécanique 10 est solidarisé de manière indémontable sur le balai 3 de façon à assurer la transmission de l'effort mécanique en provenance du bras 1 vers le balai 3. Il présente une forme sensiblement parallélépipédique s'étendant dans la deuxième direction longitudinale B du balai 3, avec deux flancs latéraux desquels s'étendent latéralement deux tourillons ou arbre 17 qui ont pour fonctions, d'une part, de solidariser le connecteur mécanique sur l'adaptateur 20 et, d'autre part, de servir, par leur coopération avec les trous pratiqués dans les parois latérales 20a et 20b de l'adaptateur, d'axe pour la rotation du balai 3 par rapport au bras 1.

Du côté extérieur, le connecteur mécanique présente une paroi 11, dénommée casquette, qui, en premier lieu, ferme la partie avant de la pièce terminale 2 et joue un rôle d'écran pour protéger les composants contenus à l'intérieur de cette pièce terminale 2 et, en second lieu, assure une finition extérieure de bonne facture. La face opposée à la casquette 11 du connecteur mécanique 10, dite face intérieure, comporte des orifices (non visibles) de connexion électrique apte à recevoir le connecteur électrique 40. En variante, la casquette 11 pourrait être intégrée a l'adaptateur 20.

Cette face intérieure du connecteur mécanique 10 comprend encore un ou des orifices d'entrée hydraulique prolongés par des canaux internes de distribution du liquide lave-vitre. Ces canaux de distribution (non représentés sur les figures) s'étendent à l'intérieur du connecteur mécanique 10 pour déboucher au droit de conduits d'alimentation 12 formés dans le connecteur mécanique 10 et ainsi alimenter des tubes de pulvérisation 6 du liquide par le balai. Ces tubes s'étendent le long des deux bords du balai 3 afin de projeter du liquide lave-vitre lors de l'aller et lors du retour du balai. Ces caractéristiques relatives à la projection du liquide lave-vitre sont globalement appelées dispositif de pulvérisation de liquide lave-vitre, pour le cas où le balai d'essuie-glace serait raccorder à un système de projection de liquide lave-vitre.

Les orifices d'entrée hydraulique délimite des canaux internes au connecteur mécanique, ces canaux ayant également pour fonction d'accueillir le support 30 pour le maintenir en position dans le connecteur mécanique 10.

Les orifices d'entrée électrique délimitent des conduits internes au connecteur mécanique 10, ces conduits ayant pour fonction d'accueillir le connecteur électrique 40 et assurer le raccordement électrique entre le réseau électrique du véhicule et le balai 3.

Ces conduits internes contiennent des fiches mâles 42 et 43 sur lesquelles des cosses femelles portées par le connecteur électrique 40 viennent s'emboîter. Cette connexion électrique apporte la puissance électrique nécessaire au fonctionnement de l'élément chauffant intégré au balai.

Le connecteur électrique 40 ou le support 30 (qui est relié au connecteur 40) est maintenu sur la pièce terminale 2 par l'intermédiaire du moyen de retenue 8. Autrement dit, le moyen de retenue garantie une liaison mécanique entre le connecteur électrique 40 et la pièce terminale 2 en fonction de la position du balai 3 par rapport à la pièce terminale 2, et plus généralement par rapport au bras 1. Cette liaison entre le connecteur électrique 40 et la pièce terminale 2 n'est pas isostatique. En effet, elle autorise un mouvement, notamment une rotation pour des raisons qui seront détaillées plus loin.

Ce connecteur électrique 40 reçoit deux câbles électriques 51 et 52 par lesquels chemine le courant électrique en provenance du réseau électrique du véhicule. Ces câbles 51 et 52 sont rassemblés pour former un faisceau qui s'étend dans le volume interne de la pièce terminale 2 et sous le bras.

Le connecteur électrique 40 reçoit également un dispositif d'étanchéité 41 enfilé sur le corps. Ce dispositif d'étanchéité 41 assure l'étanchéité de la liaison électrique entre le connecteur électrique 40 et le connecteur mécanique 10.

Le balai 3 comporte un élément chauffant, cet élément chauffant comportant un circuit ou une piste d'un conducteur électrique chauffant et un support de ce circuit.

Le support du circuit est la vertèbre 60 ou une des vertèbres du balai dans l'exemple représenté. Une vertèbre 60 est métallique et a une forme allongée. Une vertèbre 60 a en général en section une forme sensiblement rectangulaire et comprend deux surfaces planes sensiblement parallèles respectivement supérieure et inférieure.

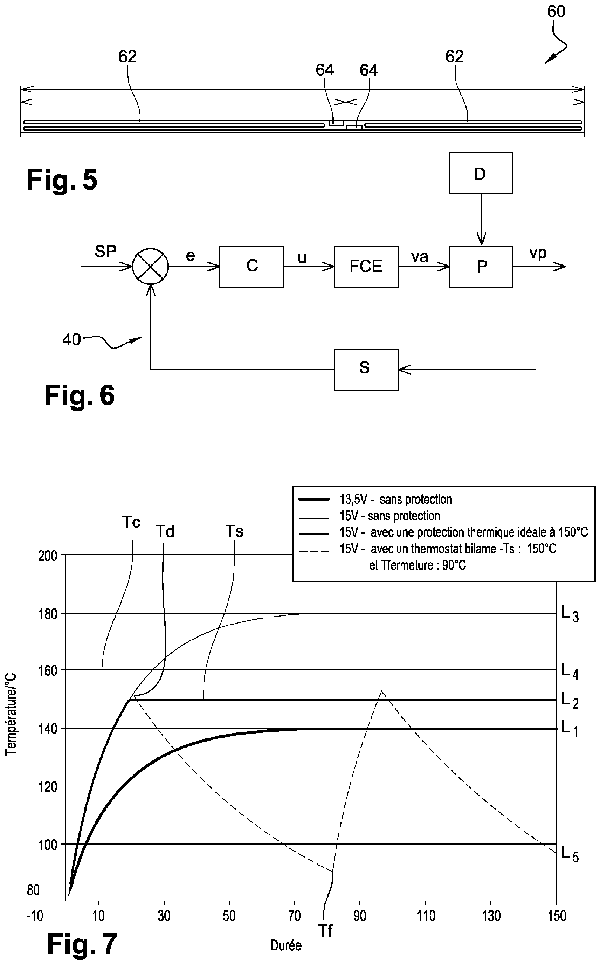

La figure 5 représente un mode de réalisation d'une vertèbre 60 pour le balai. La vertèbre 60 a une des surfaces planes précitées qui est recouverte d'un circuit d'un conducteur électrique chauffant.

Le conducteur est en général en acier inoxydable ou en alliage à base de cuivre, nickel, aluminium, etc. (cupro, laiton, etc.).

Dans les exemples représentés, le circuit comprend deux boucles 62 et deux bornes 64 d'alimentation électrique de ces boucles. Pour cela, les deux extrémités de chaque boucle 62 sont reliées respectivement aux deux bornes 64. Plus précisément, la borne positive est reliée à une première extrémité de chaque boucle et la borne négative est reliée à l'extrémité opposée de chaque boucle.

En variante, chaque circuit peut comprendre une seule boucle. Dans ce cas, la borne positive est reliée à une boucle qui va jusqu'à une extrémité du circuit de chauffage, puis revient et va jusqu'à l'autre extrémité et revient sur la borne négative. Dans le cas précité d'un circuit de chauffage à deux boucles parallèles, il y a une boucle en bas et une en haut, et chacune est reliée à la borne positive et la borne négative.

Les bornes 64 sont situées à distance des extrémités longitudinales de la vertèbre, et dans une zone sensiblement médiane de cette vertèbre. Ces bornes sont ici situées dans une zone s'étendant entre 50 et 60% environ de la longueur de la vertèbre, mesurée depuis une extrémité longitudinale de celle-ci (et donc entre 40 et 50% environ, mesurée depuis l'extrémité opposée de la vertèbre).

Cette zone correspond à la position du connecteur du balai d'essuie-glace sur la vertèbre 60. En effet, le connecteur peut comprendre des moyens de raccordement électrique destinés à venir au contact des bornes 64 du circuit de la vertèbre en position de montage. En variante, le connecteur peut être centré sur la vertèbre alors que la connexion électrique entre les bornes et les moyens de raccordement est décentrée (pour des questions d'encombrement par exemple).

Le pilotage de la chauffe de l'élément chauffant peut s'effectuer grâce à un circuit électronique à modulation de largeur d'impulsions (ou PWM) lié à un capteur de température du véhicule ou de la vitesse du véhicule. Dans le cas où un capteur viendrait à donner une information erronée (véhicule à 150 km/h alors qu'il est à l'arrêt, température extérieure négative en plein été, etc.), le PWM pourrait activer une tension inappropriée (16V au lieu d'une tension réduite à l'arrêt du véhicule par exemple), ce qui entraînerait une très forte augmentation de la température.

Les boucles 62 sont connectées en série à un régulateur de courant qui contrôle la température des boucles. Le régulateur de courant comprend un thermostat bilame calibré pour s'activer à une température seuil Ts (voir figure 7) prédéterminée. Le thermostat bilame permet de mettre en place une boucle de contrôle fermée 40 de la température des boucles 62. La figure 6 représente cette boucle de contrôle 40 de façon schématique.

Généralement, une boucle de contrôle fermée comprend un contrôleur *C*, cherchant à maintenir une variable *vp* d'un procédé *P* à une valeur consigne *SP* (pour « Set Point » en langue anglaise) prédéterminée. La valeur de la variable du procédé *vp* est mesurée par un capteur *S*, puis comparée à la valeur consigne *SP*. La différence entre ces deux valeurs est appelée erreur *e*. En fonction de cette erreur, le contrôleur *C* envoie une commande *u* à un élément de contrôle final *FCE* (pour « *Final Control Element* » en langue anglaise) qui va modifier une variable d'ajustement *va.* Cette variable d'ajustement *va* est introduite dans le procédé *P*. De plus, le procédé *P* est soumis à des perturbations *D* de l'environnement extérieur. La nouvelle valeur de la variable du procédé *vp* est mesurée par le capteur S et envoyée au contrôleur *C*.

Dans la boucle de contrôle de la température 40, le contrôleur *C* comprend le régulateur de courant. Le procédé *P* comprend réchauffement des boucles 62. La variable de procédé comprend la température *T* des boucles 62.

Le thermostat bilame comprend par exemple deux plaques électriquement conductrices (non représentées) et présentant des coefficients de dilatation différents. Ainsi, quand la température des boucles 62 est inférieure à la température seuil *Ts*, les plaques sont en contact. Le circuit électrique est donc fermé, et le circuit de chauffage fonctionne. Quand la température augmente, les plaques se dilatent et se déforment différemment, s'éloignant ainsi l'une de l'autre. Ainsi, quand les boucles 62 atteignent la température seuil *Ts*, les plaques du bilame se séparent. Le circuit électrique est donc ouvert, et le circuit de chauffage ne fonctionne plus.

Le thermostat bilame agit comme un interrupteur du circuit électrique, permettant d'interrompre la circulation du courant quand la température des boucles 62 atteint la température seuil *Ts*.

Dans la boucle de contrôle 40, le thermostat bilame est utilisé comme contrôleur *C* et comme capteur *S*. La variable de procédé *vp* comprend la température *T* des boucles. Cette valeur mesurée est soustraite à la valeur consigne *SP* qui comprend la première température seuil *Ts1.* Si la différence, c'est-à-dire l'erreur *e*, entre ces deux valeurs 25 est supérieure ou égale à zéro, alors les boucles 62 risquent de dépasser des limites de températures d'utilisation des matériaux les composant, voire d'atteindre leur point de fusion. Dans ce cas, la commande *u* du thermostat bilame comprend l'ouverture du circuit électrique. L'élément de contrôle final *FCE* comprend par exemple les plaques du thermostat bilame. La variable d'ajustement *va* comprend la valeur du courant électrique, dans ce cas cette valeur est nulle. Les boucles 62 ne sont plus alimentées et leur température *T* baisse.

Dans cette boucle de contrôle 40, les perturbations *D* comprennent la température ambiante qui varie selon la température extérieure au véhicule et selon que celui-ci est à l'arrêt ou en marche.

La figure 7 illustre la régulation en température des boucles 62 à l'aide d'un graphique de variation de la température *T* (axe des ordonnées) des boucles 62 au cours du temps *t* (axe des abscisses), pour différentes tensions d'alimentation.

Sur cette figure, une première courbe *L1* représente la variation de la température *T* des boucles 62 alimentées à une tension de 13,5V, une deuxième courbe *L2* celle de boucles 62 alimentées à une tension de 15V, une troisième courbe *L3* de boucles 62 alimentées à une tension de 15V. Dans ces trois premiers arrangements, le dispositif de chauffe 21 ne comprend pas de régulateur de courant de type thermostat bilame.

La figure 7 montre aussi une quatrième courbe horizontale *L4* représentant une température critique d'utilisation *Tc* des boucles 62 boucles 62. Au-delà de cette température, les boucles 62 peuvent être dégradées. A titre d'exemple, cette température critique *Tc* est 160°C.

Les courbes *L1* et *L3* présentent le même profil : dans un premier temps, on observe une montée en température rapide. Cette montée en température correspond à la mise en fonctionnement du circuit de chauffage ou à la mise en route du véhicule. Puis la température se stabilise et tend vers une valeur constante.

La température stabilisée des courbes dépend de la tension d'alimentation des boucles 62. Plus la tension d'alimentation est élevée, et plus la puissance dégagée est élevée, et donc plus la température stabilisée est élevée. Selon cet exemple, les tensions d'alimentation de 13,5V et 15V résultent respectivement en des températures stabilisées de 140°C et 180°C. La courbe *L3* dépasse donc la température critique *Tc* des boucles 62.

La courbe *L2* présente un plateau à la température *Ts* car le circuit de chauffage est équipée d'une protection thermique à 150°C.

Enfin, la figure 7 montre une cinquième courbe *L5* représentant la variation de la température de boucles 62 alimentées à une tension de 15V quand le circuit de chauffage comprend un régulateur de courant 35 de type thermostat bilame. A titre d'exemple, on souhaite une température maximale de 150°C pour les boucles 62. La température *Ts* du thermostat bilame est donc 150°C, c'est-à-dire légèrement inférieure à la température critique *Tc,* ce qui permet d'intégrer une marge de sécurité en fonction des tolérances du thermostat bilame.

La température Ts, ou Td pour température de déclenchement (ici de 150°C), correspond à la température d'ouverture du circuit, c'est-à-dire d'écartement des plaques du thermostat bilame, et à la perte de température. La température Tf pour la température de fermeture (ici de 90°C) correspond à la fermeture du circuit, c'est-à-dire au rapprochement et contact des plaques du thermostat, et donc au ré-enclenchement de la chauffe. Td > Tf. La courbe *L5* a une forme en dents de scie.

Grâce au thermostat bilame, la température des boucles 62 reste donc inférieure à la température critique d'utilisation *Tc.*

Il a été observé expérimentalement que la résistance des boucles 62 varie avec la température.

On dit que la résistance des boucles 62 présente une dérive thermique. Les caractéristiques de cette dérive thermique (profil de la courbe représentant la résistance en fonction de la température) dépendent du matériau de fabrication des boucles 62, de la tension et du courant d'alimentation.

Etant donné que la chaleur dissipée dépend de la résistance des boucles 62, on comprend que la chaleur dissipée n'est pas stable vis-à-vis de la température.

De plus, la variation de résistance des boucles 62 provoque une variation du courant circulant dans le circuit électrique du circuit de chauffage.

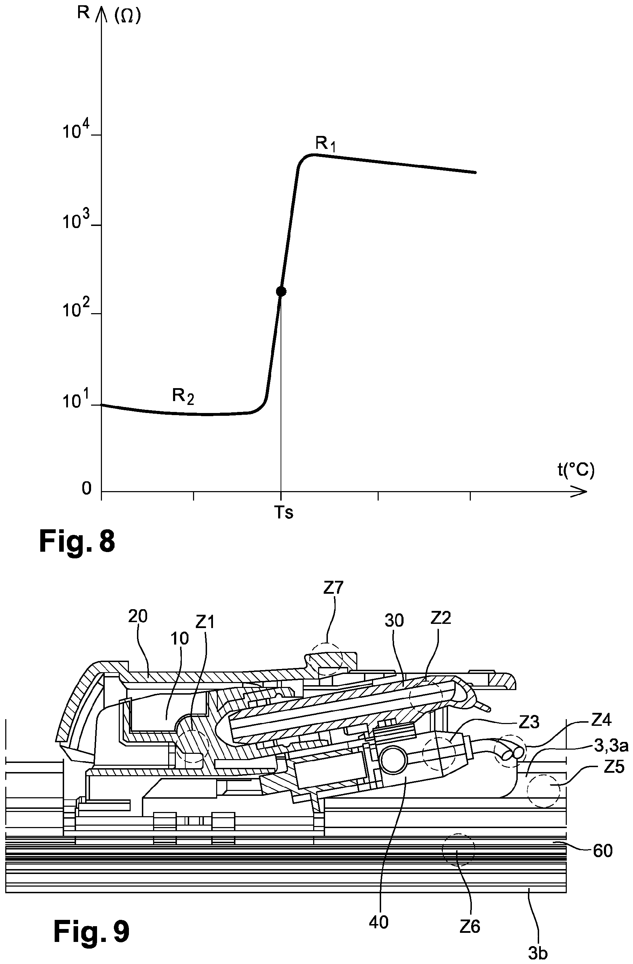

Dans le cas présent, le comportement du thermostat bilame est avantageusement similaire à celui d'une thermistance à coefficient de température positif (CTP), dont la résistance augmente fortement avec la température dans une plage de température limitée, mais diminue en dehors de cette zone. La figure 8 représente la variation de la résistance du thermostat bilame en fonction de la température. Trois zones de résistances sont distinguables sur cette figure : une première zone à basses températures utilisée pour améliorer la stabilité du courant qui parcourt les boucles, une deuxième zone autour de la température seuil Ts qui est utilisée pour assurer la fonction de fusible ré-armable ou réversible, et une troisième zone à hautes températures, au-delà de la température seuil.

Le comportement du thermostat bilame dans la première zone peut être utilisé pour améliorer la stabilité du courant qui parcourt les boucles 62. Son comportement dans la deuxième zone peut permettre d'interrompre la circulation du courant dans les boucles 62.

En effet, le thermostat présente une température seuil au-delà de laquelle sa résistance augmente fortement. Sur l'exemple de la figure 8, la résistance augmente de 10,0 Ω à environ 10000,0 Ω sur une plage de température allant de 70°C à 100°C. Le thermostat n'est plus passant et le courant circulant dans les boucles 62 tend alors vers une valeur nulle. Le régulateur de courant agit donc comme un interrupteur. Quand le courant ne circule plus dans les boucles 62, ceux-ci ne dégagent plus de chaleur et donc leur température diminue. Dès que la température est inférieure à la deuxième température seuil Ts, la résistance du thermostat est assez faible pour qu'il redevienne passant. Le courant se remet donc à circuler dans les boucles 62 qui se remettent à chauffer. Avantageusement, la température seuil est inférieure à la température critique *Tc* des les boucles 62, par exemple la température seuil est égale à 150°C.

Selon une autre variante, le comportement du thermostat bilame dans la première zone et dans la deuxième zone permet de contrôler le courant circulant, d'une part en le stabilisant et d'autre part en l'interrompant en fonction de la température des boucles 62.

Selon une variante, le thermostat bilame présente plusieurs températures seuil. Par exemple, le thermostat bilame peut être configuré pour ouvrir le circuit électrique à 150°C et pour le refermer à 130°C.

Le thermostat bilame connecté aux boucles 62 contrôle donc le courant les traversant en fonction de la température des boucles en agissant comme un interrupteur.

Ce régulateur thermique permet donc d'augmenter la robustesse du circuit de chauffage de la température vis-à-vis des boucles 62. De plus un thermostat bilame est un élément peu coûteux.

Comme illustré à la figure 9, le thermostat bilame peut être placé :
- dans une zone Z1 au niveau du connecteur mécanique 10, par exemple dans ou sur le connecteur mécanique,
- dans une zone Z2 au niveau du connecteur hydraulique 30, par exemple dans ou sur le connecteur hydraulique,
- dans une zone Z3 au niveau du connecteur électrique 40, par exemple dans ou sur le connecteur électrique,
- dans une zone Z4 au niveau des fils électriques 51, 52,
- dans une zone Z5 au niveau du corps 3a du balai, par exemple sur ou à l'intérieur de ce corps 3a,
- dans une zone Z6 au niveau de la vertèbre 60, par exemple sur la vertèbre, à proximité du connecteur mécanique 10 ou à distance de celui-ci, voire
- dans une zone Z7 au niveau de l'adaptateur 20 ou de la pièce terminale 2.

Lorsque le chauffage est activé, le flux de chaleur monte. La présence d'un thermostat bilame dans l'une des zones précitées permet de couper l'alimentation électrique du chauffage en cas de température excessive du circuit. Le thermostat bilame agit ainsi comme fusible thermique.

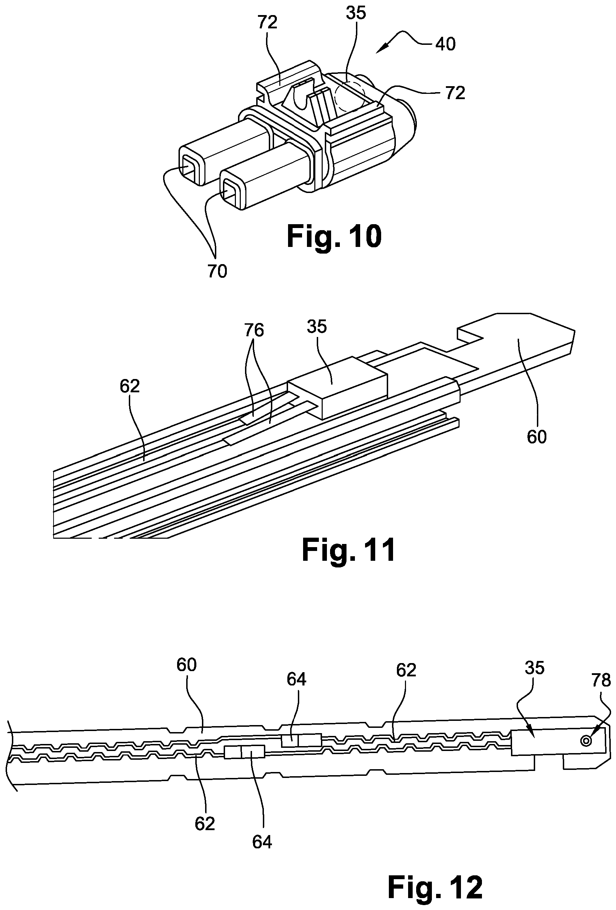

La figure 10 est un mode de réalisation d'un connecteur, électrique 40, portant un thermostat bilame 35. Le connecteur comporte un corps portant des fiches 70 de connexion électrique configurées pour être connectées par emboîtement à des fiches complémentaires du connecteur mécanique 10 du balai. Le connecteur comprend des moyens 72 de fixation sur le connecteur hydraulique 30 du balai. Ces moyens de fixation 72 sont portés par le corps 22 du connecteur dans l'exemple représenté.

Le thermostat bilame 35 peut également être porté par le corps du connecteur 30, 40.

Les figures 11 et 12 illustrent des variantes de réalisation dans lesquelles le thermostat bilame 35 est situé sur la vertèbre 60, et plus précisément au voisinage d'une extrémité longitudinale de cette vertèbre.

Le thermostat bilame 35 est situé sur la surface, ici supérieure, de la vertèbre 60 sur laquelle est situé le circuit de chauffage, c'est-à-dire sur lesquelles sont situées les boucles 62. Les plaques du thermostat 35 sont reliées à deux portions d'une boucle 62 par l'intermédiaire de conducteurs 76 ou fils appropriés, soudés par exemple aux plaques et sur les portions de boucle. Ces conducteurs peuvent traverser des ouvertures réalisées dans le film chauffant porté par la vertèbre et intégrant le circuit de chauffage. L'ensemble comportant le thermostat bilame 35 et les conducteurs 76 de liaison à la boucle 62 peuvent être encapsulés ou surmoulés pour les protéger.

La variante de réalisation de la figure 12 diffère de celle de la figure 11 en ce que le thermostat bilame 35 est associé à un voyant lumineux 78 qui permet de renseigner un utilisateur sur l'état du thermostat bilame. Par exemple, lorsque les plaques du thermostat sont électriquement connectées entre elles, le circuit de chauffage est opérationnel et le voyant lumineux 78 peut être allumé. Lorsque les plaques du thermostat sont à distance l'une de l'autre et donc pas électriquement connectées, le circuit de chauffage n'est pas opérationnel et le voyant lumineux 78 peut être éteint.

Le voyant lumineux est de préférence situé au niveau du thermostat et donc dans l'une des zones Z1 à Z7 précitées.

## Revendications

1. Balai (3) d'essuie-glace de véhicule, en particulier automobile, de type plat et comportant une vertèbre longitudinale (60) de cintrage qui est solidaire sensiblement en son milieu d'un connecteur mécanique (10) de liaison à un bras (1) d'essuie-glace, et un circuit électrique de chauffage supporté par la vertèbre longitudinale (60), **caractérisé en ce que** le balai comprend au moins une rampe de distribution de fluide, en particulier d'un liquide lave-glace, **en ce que** ledit circuit comprend au moins un thermostat bilame (35) configuré pour assurer une fonction de fusible thermique, et **en ce que** ledit lequel au moins un thermostat bilame (35) est situé au niveau du connecteur mécanique (10).

2. Balai (3) selon la revendication 1, dans lequel au moins un thermostat bilame (35) est situé à une extrémité longitudinale du balai.

3. Balai (3) selon la revendication 1, dans lequel au moins un thermostat bilame (35) est situé dans une zone de liaison du balai à un bras (1) d'essuie-glace.

4. Balai (3) selon l'une quelconque des revendications précédentes, dans lequel au moins un thermostat bilame (35) est situé au niveau d'au moins un embout d'extrémité (3c) monté à une extrémité longitudinale de ladite vertèbre (60).

5. Balai (3) selon l'une des revendications précédentes, dans lequel il comprend un connecteur hydraulique (30) configuré pour coopérer, par exemple par emboîtement, avec ledit connecteur mécanique (10).

6. Balai (3) selon la revendication précédente, dans lequel au moins un thermostat bilame (35) est situé au niveau du connecteur hydraulique (30) ou sur ledit connecteur hydraulique.

7. Balai (3) selon l'une des revendications précédentes, dans lequel il comprend un connecteur électrique (40) configuré pour coopérer, par exemple par emboîtement, avec ledit connecteur mécanique (10).

8. Balai (3) selon la revendication précédente, dans lequel au moins un thermostat bilame (35) est situé au niveau du connecteur électrique (40) ou sur ledit connecteur électrique.

9. Balai (3) selon la revendication précédente, dans lequel ledit au moins un thermostat bilame (35) est relié à au moins un fil électrique (51, 52) d'alimentation dudit connecteur électrique (40).

10. Balai (3) selon l'une quelconque des revendications précédentes, dans lequel au moins un thermostat bilame (35) est situé dans ou sur un carter ou corps longitudinal (3a) dudit balai.

11. Balai (3) selon l'une des revendications précédentes, dans lequel ledit au moins un thermostat bilame (35) est associé à un voyant lumineux (78) configuré pour signaler un état de ce thermostat.

## Patentansprüche

1. Scheibenwischerblatt (3) für ein Fahrzeug, insbesondere ein Kraftfahrzeug, vom flachen Typ und umfassend einen Krümmungslängsbalken (60), der im Wesentlichen in seiner Mitte fest mit einem mechanischen Verbinder (10) zum Verbinden mit einem Scheibenwischerarm (1) verbunden ist, und einen elektrischen Heizkreis, der von dem Längsbalken (60) getragen wird, **dadurch gekennzeichnet, dass** das Wischerblatt mindestens eine Verteildüse für ein Fluid, insbesondere eine Scheibenwaschflüssigkeit, aufweist, dass der Kreis mindestens ein Bimetallthermostat (35) aufweist, das dazu ausgestaltet ist, eine Thermosicherungsfunktion zu gewährleisten, und dass das mindestens eine Bimetallthermostat (35) am mechanischen Verbinder (10) angeordnet ist.

2. Wischerblatt (3) nach Anspruch 1, bei dem mindestens ein Bimetallthermostat (35) an einem Längsende des Wischerblatts angeordnet ist.

3. Wischerblatt (3) nach Anspruch 1, bei dem mindestens ein Bimetallthermostat (35) in einem Verbindungsbereich zum Verbinden des Wischerblatts mit einem Scheibenwischerarm (1) angeordnet ist.

4. Wischerblatt (3) nach einem der vorhergehenden Ansprüche, bei dem mindestens ein Bimetallthermostat (35) an mindestens einem Endstück (3c) angeordnet ist, das an einem Längsende des Balkens (60) angebracht ist.

5. Wischerblatt (3) nach einem der vorhergehenden Ansprüche, wobei es einen hydraulischen Verbinder (30) umfasst, der dazu ausgestaltet ist, beispielsweise durch Einstecken, mit dem mechanischen Verbinder (10) zusammenzuwirken.

6. Wischerblatt (3) nach dem vorhergehenden Anspruch, bei dem mindestens ein Bimetallthermostat (35) am hydraulischen Verbinder (30) oder auf dem hydraulischen Verbinder angeordnet ist.

7. Wischerblatt (3) nach einem der vorhergehenden Ansprüche, wobei es einen elektrischen Verbinder (40) umfasst, der dazu ausgestaltet ist, beispielsweise durch Einstecken, mit dem mechanischen Verbinder (10) zusammenzuwirken.

8. Wischerblatt (3) nach dem vorhergehenden Anspruch, bei dem mindestens ein Bimetallthermostat (35) am elektrischen Verbinder (40) oder auf dem elektrischen Verbinder angeordnet ist.

9. Wischerblatt (3) nach dem vorhergehenden Anspruch, bei dem mindestens ein Bimetallthermostat (35) an mindestens eine elektrische Versorgungsader (51, 52) des elektrischen Verbinders (40) angeschlossen ist.

10. Wischerblatt (3) nach einem der vorhergehenden Ansprüche, bei dem mindestens ein Bimetallthermostat (35) in oder auf einem Gehäuse oder Längskörper (3a) des Wischerblatts angeordnet ist.

11. Wischerblatt (3) nach einem der vorhergehenden Ansprüche, bei dem mindestens ein Bimetallthermostat (35) einer Anzeigelampe (78) zugeordnet ist, die dazu ausgestaltet ist, einen Zustand dieses Thermostats zu melden.

## Claims

1. Screen wiper blade (3) of a vehicle, in particular a motor vehicle, of the flat type and including a longitudinal vertebra (60) for bending, which is integral, substantially in its middle, with a mechanical connector (10) for attachment to a screen wiper arm (1), and a heating electrical circuit carried by the longitudinal vertebra (60), **characterized in that** the wiper blade (3) comprises at least one ramp for distributing a fluid, in particular, a screen washing liquid, **in that** said circuit comprises at least one bimetal strip thermostat (35) configured to provide a thermal fuse function, and **in that** the said at least one bimetal strip thermostat (35) is situated at the mechanical connector (10).

2. Wiper blade (3) according to claim 1, **characterized in that** said at least one bimetal strip thermostat (35) is situated at a longitudinal end of the wiper blade.

3. Wiper blade (3) according to claim 1, **characterized in that** said at least one bimetal strip thermostat (35) is situated in a zone of attachment of the wiper blade to a screen wiper blade arm (1).

4. Wiper blade (3) according to any one of the preceding claims, **characterized in that** said at least one bimetal strip thermostat (35) is situated at at least one end piece (3c), installed at a longitudinal end of said vertebra (60).

5. Wiper blade (3) according to any one of the preceding claims, **characterized in that** it comprises a hydraulic connector (30) configured to cooperate, for example by insertion, with said mechanical connector (10).

6. Wiper blade (3) according to the preceding claim, **characterized in that** said at least one bimetal strip thermostat (35) is situated at the hydraulic connector (30) or on said hydraulic connector.

7. Wiper blade (3) according to any one of the preceding claims, **characterized in that** it comprises an electrical connector (40) configured to cooperate, for example by insertion, with said mechanical connector (10).

8. Wiper blade (3) according to the preceding claim, **characterized in that** said at least one bimetal strip thermostat (35) is situated at the electrical connector (40) or on said electrical connector.

9. Wiper blade (3) according to the preceding claim, **characterized in that** said at least one bimetal strip thermostat (35) is connected to at least one electrical wire (51, 52) supplying said electrical connector (40).

10. Wiper blade (3) according to any one of the preceding claims, **characterized in that** said at least one bimetal strip thermostat (35) is situated in or on a longitudinal casing or body (3a) of said wiper blade.

11. Wiper blade (3) according to any one of the preceding claims, **characterized in that** said at least one bimetal strip thermostat (35) is associated with an indicator light (78) configured to signal a state of the thermostat.
